# EUROPÄISCHE PATENTSCHRIFT

(11) **EP 1 656 512 B1**
(45) Veröffentlichungstag und Bekanntmachung des Hinweises auf die Patenterteilung: **13.03.2013**
(21) Anmeldenummer: 04763843.2
(22) Anmeldetag: 06.08.2004
(51) Int. Cl.: F16G 13/16

(54) **KETTENLASCHE FÜR EINE ENERGIEFÜRUNGSKETTE SOWIE ENERGIEFÜHRUNGSKETTE**
LINK PLATE FOR AN ENERGY TRANSMISSION CHAIN, AND CORRESPONDING ENERGY TRANSMISSION CHAIN
ECLISSE POUR CHAINE DE GUIDAGE D'ELEMENTS DE TRANSPORT D'ENERGIE ET CHAINE DE GUIDAGE D'ELEMENTS DE TRANSPORT D'ENERGIE

(30) Priorität: 21.08.2003 DE 10339168
(43) Veröffentlichungstag der Anmeldung: 17.05.2006
(73) Patentinhaber: Tsubaki Kabelschlepp GmbH, 57482 Wenden-Gerlingen (DE)
(72) Erfinder: ECKL, Erwin, 57076 Siegen (DE); SAMEN, Heiner, 51709 Marienheide (DE); WEHLER, Herbert, 57290 Neunkirchen (DE)
(74) Vertreter: Neumann, Ditmar
(86) Internationale Anmeldenummer: PCT/EP2004/008803
(87) Internationale Veröffentlichungsnummer: WO 2005/021996

(56) Entgegenhaltungen:
- EP-A- 0 856 683
- EP-A- 1 267 094
- EP-B1- 0 770 793
- DE-C- 3 837 764

## Beschreibung

Der Gegenstand der Erfindung bezieht sich auf eine Kettenlasche für eine Energieführungskette sowie auf eine Energieführungskette.

Leitungsführungseinheiten zur aktiven Führung von Leitungen, Kabeln oder dergleichen mit einem ersten Ende, das ortsfest angeordnet ist, und mit einem zweiten Ende, das bewegbar ist, sind in zahlreichen Ausführungsformen bekannt.

Die klassische Leitungsführungseinheit, die auch als Energieführungskette oder kurz Energiekette bezeichnet wird, besteht aus einzelnen gelenkig miteinander verbundenen Kettengliedern, die einen gemeinsamen Führungskanal bilden. In diesem Führungskanal sind Leitungen, Kabel oder dergleichen angeordnet.

Durch die WO 98/40645 ist eine Leitungsführungseinheit bekannt, die aus einstückigen Schutzelementen aus Kunststoff besteht. Das Schutzelement ist einteilig gespritzt oder gegossen und weist untereinander durch bewegbare Brücken verbundene Teile auf. Das Schutzelement hat ein Bodensegment mit einer Oberseite und einer Unterseite und mindestens ein Wandsegment, das durch Biegen und/oder Falten in Richtung der Oberseite des Bodensegmentes durch mechanisches Schließen eines Schließmechanismussees zu einem geschlossenen Kanalabschnitt geformt werden kann. Das Schutzelement ist vorzugsweise mit anderen gleichartigen Schutzelementen so verbunden oder verbindbar, dass die Kanalabschnitte in eine Längsrichtung einen Kanal für Leitungen bilden.

Durch die EP 0 499 809 A1 ist eine Energieführungskette zum Führen von Energieleitern, insbesondere Kabel oder Schläuche von einem festen Anschluss zu einem beweglichen Verbraucher bekannt. Die Energieführungskette besteht aus einer Vielzahl von Kettengliedern, die aus zwei im Abstand voneinander und parallel zueinander angeordneten Kettenlaschen und zwei die Kettenlaschen untereinander verbindenden Traversen bestehen.

Der gegenseitige Schwenkwinkel benachbarter Kettenglieder wird durch Anschlagflächen aufweisende Nocken und Einsätze begrenzt. Die Nocken der einen Kettenlasche sind in einer Ausnehmung der Kettenlasche angeordnet und in Längsrichtung der Kettenlasche ausgerichtet. Die Nocken an einem Ende der Kettenlasche sind im Vergleich zu den Nocken am anderen Ende der gleichen Kettenlasche um einen Winkel von 90° versetzt in entsprechenden Ausnehmungen angeordnet. Demzufolge steht die Verbindungslinie zwischen den Nocken rechtwinklig zu der Längsachse des Kettengliedes, während die anderen Nocken auf der Längsachse der Kettenlasche liegen. In die Ausnehmungen zwischen den benachbarten Kettenlaschen in die Ausnehmungen eingesetzte Einsatz ist im wesentlichen zylindrisch ausgebildet. Der Einsatz hat zwei diametral gegenüberliegende Schlitze und zwei Ausnehmungen. Die Schlitze haben ein den Nocken entsprechende Breite, wogegen sich Ausnehmungen über ein den Schwenkwinkel benachbarter Kettenglieder bestimmenden Kreisbogenabschnitt erstrecken. Die Ausnehmungen haben Anschlagflächen, wobei die Anschlagflächen jeweils diametral gegenüberliegend an dem Einsatz angeordnet sind. Die Anschlagflächen sind beispielsweise um 90° im mathematisch positiven Drehsinn versetzt zu den Schlitzen angeordnet. Der Winkel zwischen den Anschlagflächen ist vorgegeben.

Durch den Einsatz wird der maximale Verschwenkwinkel benachbarter Kettenglieder definiert. Dieser Winkel stimmt auch den Krümmungsradius im Übergangsbereich zwischen einem Obertrum und einem Untertrum einer Energieführungskette.

Durch die DE 197 15 531 ist eine weitere Ausführungsform einer Energieführungskette zur Führung von Schläuchen, Kabeln oder dergleichen zwischen zwei Anschlussstellen bekannt. Diese Energieführungskette ist durch Kettenglieder gebildet, wobei die Kettenglieder Kettenlaschen aufweisen, die durch Traversen miteinander verbunden werden. Diese Kettenlaschen weisen Anschläge auf, die so unsymmetrisch in Bezug auf die in Kettenlängsrichtung verlaufende Mittelachse als Spiegelachse angeordnet sind, daß sie je nach Orientierung einer dieser Laschen in Bezug auf die Kettenlängsrichtung die durch die Anschläge definierten Begrenzungswinkel Abwinkelung unterschiedlich sind. Durch diese Maßnahme können zwei verschiedene Krümmungsverhalten für die Energieführungskette realisiert werden.

Durch die EP 1 267 094 A2 ist eine Energieführungskette bekannt, die aus Kettengliedern aufgebaut ist. Jedes Kettenglied weist zwei parallel zueinander angeordnete Kettenlaschen auf. Die Kettenlaschen weisen Überlappungsbereiche auf. In den Überlappungsbereichen sind Anschlagflächen angeordnet, die eine Abwinkelung der Energieführungskette begrenzen. Die Anschlagflächen sind auf einem gedachten Kreisumfang angeordnet. Eine vergleichbare Ausgestaltung einer Lasche ist durch die Druckschrift EP 0 856 663 A1 bzw. durch die DE 38 37 764 C1 vorbekannt.

Der vorliegenden Erfindung liegt die Zielsetzung zur Grunde eine Kettenlasche für eine Energieführungskette anzugeben, welche eine erhöhte Funktionalität aufweist.

Diese Zielsetzung wird durch die erfindungsgemäße Kettelasche mit den Merkmalen das Anspruchs 1 erreicht. Vorteilhafte Weiterbildungen und Ausgestaltungen der erfindungsgemäßen Kettenlasche sind Gegenstand der Abhängigen Ansprüche.

Die erfindungsgemäße Kettenlasche zeichnet sich dadurch aus, dass die Überlappungsbereiche jeweils einen zentralen Bereich aufweisen, die jeweils von wenigstens zwei Bereichen umgeben sind, in denen jeweils einige Anschlagflächen angeordnet sind in Abkehr von den bisherigen Konstruktionen einer Kettenlasche wird durch die erfindungsgemäße Ausgestaltung der Kettenlasche eine Funktionstrennung der Anschlagflächen erreicht, so dass die Herstellbarkeit sowie der konstruktive Aufwand einer solchen Kettenlasche noch weiter vereinfacht wird.

Die erfindungsgemäße Kettenlasche zeichnet sich insbesondere dadurch aus, dass zwei Bereiche so ausgebildet sind, dass bei einer den Kettenlaschen zusammengesetzten Energieführungskette die Abwinkelung der Energieführungskette in Abhängigkeit von Verschwenkrichtung unterschiedlich ist. Durch diese Maßnahme wird zum einen durch die Bereiche definierter Krümmungsradius Energieführungskette vorgegeben. Andererseits wird durch den zweiten Bereich eine Vorspannung in die Energieführungskette eingebracht. Durch die Einbringung einer Vorspannung in die Energieführungskette wird die Lebensdauer einer Energieführungskette im positiven Sinne beeinflusst. Darüber hinaus kann eine Energieführungskette, die mit einer Vorspannung versehen ist, höhere Leitungsgewichte aufnehmen.

Im konkreten wird vorgeschlagen, dass ein erster Bereich, der Anschlagflächen aufweist, vorgesehen ist, wobei diese Anschlagflächen eine aus den Kettenlaschen zusammengesetzten Energieführungskette einen Krümmungsbereich in einem Übergangsbereich zwischen einem Untertrum und einem Obertrum der Energieführungskette bestimmt.

Durch den zweiten Bereich, der gleichfalls Anschlagflächen aufweist, wird bei einer aus den erfindungsgemäßen Kettenlaschen zusammengesetzten Energieführungskette eine Vorspannung der Energieführungskette bestimmt.

Zusätzlich zu den beiden Bereichen kann die erfindungsgemäße Kettenlasche auch einen dritten Bereich aufweisen, der wenigstens einen Anschlagkörper mit wenigstens einer Anschlagfläche hat, und der Anschlagkörper eine federelastische Charakteristik aufweist. Durch die federelastische Charakteristik wird eine Dämpfung der Bewegung während der Verschwenkung der Kettenlaschen erzielt.

Der Anschlagkörper kann hierbei im wesentlichen im Querschnitt V-förmig ausgebildet sein.

Die Bereiche, in denen die Anschlagflächen ausgebildet sind, sind im wesentlichen konzentrisch zueinander angeordnet.

Die Form bzw. Gestalt der Anschlagflächen sowie die Anzahl der Bereiche kann sehr unterschiedlich ausgebildet sein. Sie wird durch die Verwendung der Kettenlasche beeinflusst. Es besteht die Möglichkeit Energieführungsketten aus gleichen Kettenlaschen aufzubauen. Anstatt gleicher Kettenlaschen kann durch Verwendung unterschiedlicher Kettenlaschen, d.h. Kettenlaschen, bei denen die Anschlagflächen unterschiedlich sind, Energieführungsketten mit anderen Eigenschaften zusammengestellt werden.

Vorzugsweise ist die Kettenlasche aus Kunststoff, insbesondere aus Kunststoff, der faserverstärkt, gebildet ist. Zur Faserverstärkung können Glasfasern herangezogen werden. Es besteht auch die Möglichkeit, dass die Verstärkung auch durch andere Zusätze möglich sind.

Die Kettenlasche kann auch aus einer Zusammensetzung, welche mindestens ein nachwachsenden Rohstoff, ein diesen nachwachsenden Rohstoff verbindendes Material, sowie gegebenenfalls Hilfs- und/oder Zusatzstoffe enthält, gebildet werden. Das Material kann auch wenigstens teilweise aus wenigstens einem Metall, insbesondere in Form von Pulver, bestehen.

Es besteht die Möglichkeit, Kettenlaschen mit Anschlagflächen auszubilden, wobei die Anschlagflächen an der Kettenlasche unterschiedliche Positionen haben können. Hierdurch wird die Möglichkeit geschaffen, mit in Überlappungsbereichen angeordneten Anschlagflächen, die sehr unterschiedliche Abwinkelungen der Energieführungskette zulassen.

Für die Belastung der Kettenlaschen während der Bewegung der Energieführungskette ist die Ausgestaltung der Anschlagflächen von besonderer Bedeutung. Um die Anschlagflächen relativ groß ausbilden zu können, wird vorgeschlagen, dass wenigstens einige Anschlagflächen im wesentlichen konvex oder konkav ausgebildet werden. Es besteht auch die Möglichkeit, dass die zusammenwirkende Flächenpaare so ausgebildet sind, dass die eine Anschlagsfläche konkav und die andere Anschlagfläche konvex ausgebildet ist.

Während des Betriebes konventioneller Energieführungsketten entsteht durch das Aneinanderschlagen der Anschlagflächen eine gewisse Geräuschemission, die als unangenehm empfunden werden kann. Zur Reduktion der Geräuschemission wird vorgeschlagen, dass wenigstens einige Anschlagkörper, die wenigstens eine Anschlagfläche aufweisen, mit einer federelastischen Charakteristik ausgebildet werden. Hierdurch wird eine dämpfende Wirkung erreicht, so dass während des Betriebes einer Energieführungskette, die Geräuschemission signifikant reduziert werden kann. Das Ausmaß, der Reduktion der Geräuschemission ist auch abhängig von der Charakteristik der Anschlagflächen. Die federelastische Charakteristik kann durch konstruktive Maßnahmen erreicht werden.

Durch die federelastische Charakteristik der Anschlagflächen wird auch ein schlagartiges Abbremsen der Bewegung der Kettenlaschen reduziert. Konstruktiv kann dies dadurch erreicht werden, dass beispielsweise der Anschlagkörperquerschnitt im wesentlichen V-förmig ausgebildet wird.

Zu einer noch weiteren Reduktion der Geräuschemission bzw. zu einer noch weiteren Verbesserung der Abbremsung eines Verschwenkvorgangs zweier benachbarter Kettenlaschen einer Energieführungskette wird vorgeschlagen, dass wenigstens eine Anschlagfläche aus einem ersten Material gebildet wird, wobei die Anschlagfläche wenigstens einen Bereich aufweist, der aus einem zweiten Material gebildet wird, der gegenüber dem ersten Material eine geringere Härte aufweist. Die Herstellung einer solchen Anschlagfläche kann beispielsweise nach dem Zwei-Komponenten-Spritzverfähren erfolgen. Alternativ besteht auch die Möglichkeit, den Bereich durch beispielsweise Elemente, die vorzugsweise aus einem weichelastischen Kunststoff besteht, zu versehen. Diese Elemente können in Form von Noppen form- und/oder kraftschlüssig mit den Anschlagflächen verbunden sein.

Nach einem noch weiteren erfinderischen Gedanken wird eine Energieführungskette mit gelenkig miteinander verbundenen Kettengliedern, die aus Kettenlaschen nach einem oder mehreren Ansprüchen 1 bis 10 und diese verbindenden Elementen vorgeschlagen.

Weitere Einzelheiten und Vorteile der Erfindung werden anhand der in der Zeichnung dargestellten Ausführungsbeispiele erläutert, ohne dass der Gegenstand der Erfindung auf diese konkrete Ausführungsbeispiele beschränkt wird.

Es zeigen:
- Fig. 1: eine erfindungsgemäße Kettenlasche in einer perspektivischen Ansicht von vorn,
- Fig. 2: die Kettenlasche nach Figur 1 in einer Rückansicht,

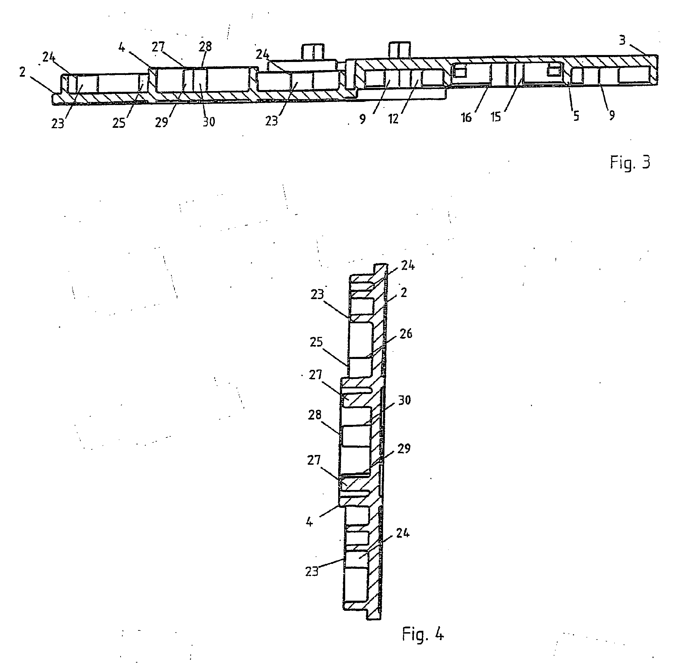

- Fig. 3: die Kettenlasche nach Fig. 1 im Längsschnitt,
- Fig. 4: im Querschnitt einen Überlappungsbereich in der Kettenlasche,
- Fig. 5: vergrößert einen Anschlagkörper,
- Fig. 6: schematisch in einer Draufsicht eine Konstellation zweier Anschlagkörper,
- Fig. 7: schematisch in einer Draufsicht eine Variante eines Anschlagkörpers und
- Fig. 8: eine weitere Variante eines Anschlagkörpers im Schnitt und in einer Draufsicht

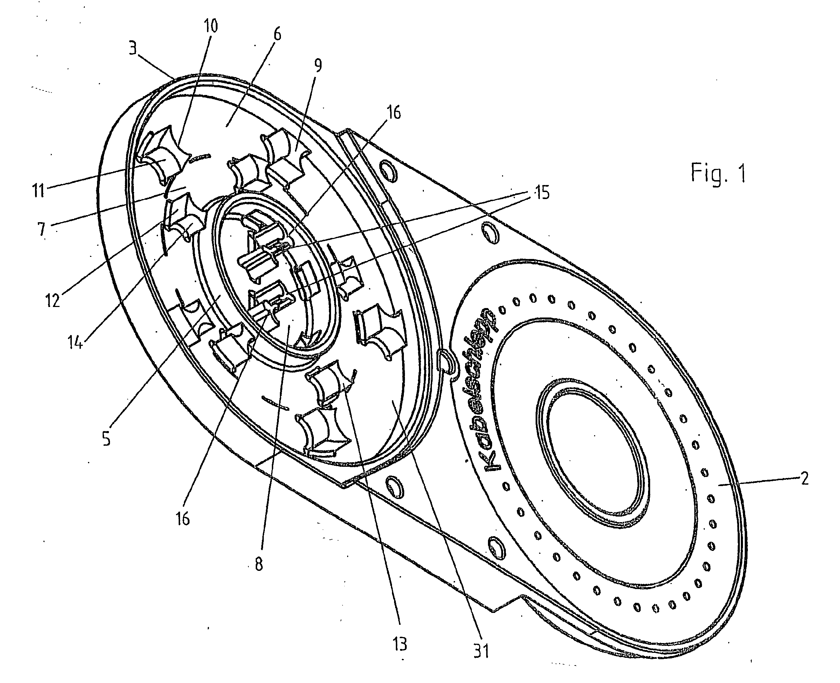

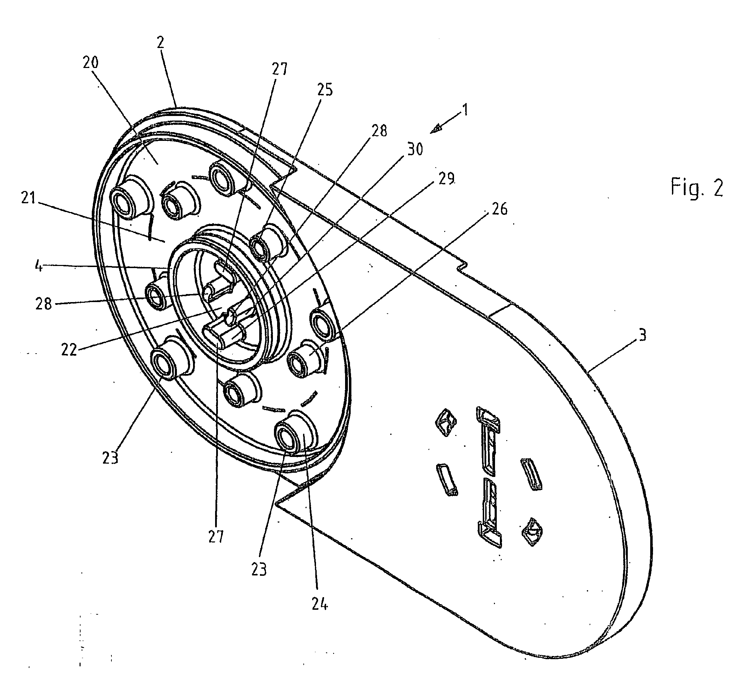

In den Figuren 1 und 2 ist ein Ausführungsbeispiel einer erfindungsgemäßen Kettenlasche 1 dargestellt. Die Kettenlasche 1 ist als länglicher Körper ausgebildet. Er weist an seinen Endbereichen jeweils einen Überlappungsbereich 2, 3 auf. Die Überlappungsbereiche 2, 3 sind derart ausgebildet, dass der Überlappungsbereich 2 einer ersten Kettenlasche mit einem Überlappungsbereich 3 einer zweiten Kettenlasche zusammenwirkt.

Zwei benachbarte Kettenlaschen sind um eine gemeinsame Achse abwinkelbar. Hierzu weist der Überlappungsbereich 2 einen ersten Gelenkkörper 4 auf. Dieser erste Gelenkkörper 4 ist in dem dargestellten Ausführungsbeispiel rohrförmig ausgebildet. Mit dem ersten Gelenkkörper 4 wirkt ein zweiter Gelenkkörper 5 zusammen, der in den Überlappungsbereich 3 vorgesehen ist. Auch der zweite Gelenkkörper 5 ist im wesentlichen rohrförmig ausgebildet. Der Innendurchmesser des zweiten Gelenkkörpers 5 ist dabei etwas größer als der Außendurchmesser des ersten Gelenkkörpers 4, so dass der erste Gelenkkörper 4 in den zweiten Gelenkkörper 5 einbringbar ist und um die Längsachse der Gelenkkörper verschwenkbar ist.

Zur Festlegung können die Gelenkkörper 4, 5 Rastmittel, insbesondere nach dem Feder-Nut-Prinzip aufweisen. Es ist nicht notwendig, dass die Gelenkkörper, wie sie in dem konkreten Ausführungsbeispiel dargestellt sind, im wesentlichen rohrförmig ausgebildet sind. Es besteht auch die Möglichkeit, den ersten Gelenkkörper in Form eines Gelenkzapfens und den zweiten Gelenkkörper in Form einer Gelenkaufnahme auszubilden. Durch die an den Gelenkkörpern ausgebildeten Rastmittel wird eine lösbare Verbindung zwischen zwei benachbarten Laschen erreicht. Hierbei ist jedoch die Verbindung so ausgebildet, dass zum Lösen der Laschen eine gewisse Kraft notwendig ist. Mittels der Rastmittel, welche an den Gelenkkörpern ausgebildet sind, wird erreicht, dass auch während des Betriebes eine Energieführungskette, die Laschenverbindung bestehen bleibt Die Rastverbindung der Gelenkkörper kann auch als Hilfe für Montagezwecke der Energieführungskette genutzt werden.

Die Figur 1 ist in dem Überlappungsbereich 3 eine gestrichelte Linie eingezeichnet, die den Überlappungsbereich 3 in einen ersten Bereich 6 und einen zweiten Bereich 7 unterteilt. Bei dieser Unterteilung handelt es sich um eine gedachte, theoretische Unterteilung. Der Überlappungsbereich wird noch durch den zweiten Gelenkkörper 5 in einen dritten Bereich 8 unterteilt. Die Bereiche sind im wesentlichen konzentrisch zueinander angeordnet. Sie umgeben einen zentralen Bereich des Überlappungsbereichs 3.

Der erste Bereich 6 weist in dem dargestellten Ausführungsbeispiel 5 Anschlagkörper 9 auf Die Anschlagkörper sind in Umfangsrichtung betrachtet äquidistant zueinander angeordnet. Jeder Anschlagkörper weist zwei Anschlagflächen 10, 11 auf. Die Anschlagflächen 10, 11 sind in dem dargestellten Ausführungsbeispiel konkav gekrümmt.

Der zweite Bereich 7 weist Anschlagkörper 12 auf. Jeder Anschlagkörper 12 innerhalb des zweiten Bereichs 7 weist jeweils zwei Anschlagflächen 13, 14 auf Die Anschlagflächen 13, 14 der Anschlagkörper 12 sind in dem dargestellten Ausführungsbeispiel konkav gekrümmt ausgebildet.

Innerhalb des dritten Bereichs 8 sind Anschlagkörper 15, 16 vorgesehen. Die Anschlagkörper 16 liegen auf einem gedachten Kreisumfang, der größer ist, als ein gedachter Kreisumfang, auf dem die Anschlagkörper 15 angeordnet sind. Die Anschlagkörper 15 weisen konkav gekrümmte Anschlagflächen 17 auf. Die Anschlagkörper 16 weisen gleichfalls konkav gekrümmte Anschlagflächen 18 auf.

Die Anschlagkörper 9, 12, 15 und 16 mit ihren Anschlagflächen wirken mit entsprechenden im Überlappungsbereich 2 ausgebildeten Anschlagkörpern zusammen. Hierzu ist der Überlappungsbereich 2 in drei Bereiche 20, 21 und 22 unterteilt. Die Bereiche 20, 21 sind konzentrisch zueinander um einen zentralen Bereich des Überlappungsbereichs 2 ausgebildet. Innerhalb des ersten Bereichs 20 sind Anschlagkörper 23 angeordnet. Die Anzahl der Anschlagkörper 23 entspricht der Anzahl der Anschlagkörper 9 im Überlappungsbereich 3. Die Anschlagkörper 23 sind in dem dargestellten Ausführungsbeispiel im wesentlichen zylinderförmig ausgebildet. Die Mantelfläche der Anschlagkörper 23 bildet im wesentlichen jeweils eine Anschlagfläche 24.

In dem dargestellten Ausführungsbeispiel sind die Anschlagkörper 23 zylinderförmig ausgebildet. Der Durchmesser der Anschlagkörper 23 und die Krümmung der Anschlagflächen 10, 11 sind vorzugsweise so aufeinander abgestimmt, dass eine möglichst gleichmäßige Flächenbelastung entsteht, wenn die Anschlagflächen der Anschlagkörper 9 und 23 aneinanderliegen. Hierdurch kann auch die Flächenpressung minimiert werden.

Die Anschlagkörper 9, 23 sind dabei so angeordnet, dass in einer gestreckten Lage einer Energieführungskette, diese eine Vorspannung aufweist. Das Ausmaß der Vorspannung ist dabei abhängig von dem Versatz der zusammenwirkenden Anschlagkörper 9, 23.

Innerhalb des zweiten Bereichs 21 sind Anschlagkörper 25 angeordnet. Die Anschlagkörper 25 weisen jeweils eine Anschlagfläche 26 auf. Sie ist gebildet durch die Mantelfläche der zylinderförmig ausgebildeten Anschlagkörper 25. Andere Konfigurationen bzw. Gestalten der Anschlagkörper 25 ist möglich. Die Anschlagflächen 26 sind hinsichtlich ihrer Geometrie so ausgebildet, dass sie mit den Anschlagflächen 13, 14 der Anschlagkörper 12 zusammenwirken. Durch die Lage und Anzahl der Anschlagkörper 12, 25 wird der Verschwenkwinkel zweier benachbarter Kettenlaschen vorgegeben. Durch eine Veränderung der Geometrie und/oder Lage der Anschlagkörper 12 und 25, bzw. durch eine Erhöhung der Anzahl der Anschlagkörper 12, 25 kann der Verschwenkwinkel vergrößert bzw. verkleinert werden. Dieser Verschwenkwinkel bestimmt auch den Krümmungsradius eines Übergangsbereichs. Der Übergangsbereich liegt zwischen einem Obertrum und einem Untertrum einer Energieführungskette.

Innerhalb des dritten Bereichs 22, der in dem dargestellten Ausführungsbeispiel innerhalb des rohrförmig ausgebildeten ersten Gelenkkörpers 4 angeordnet ist, sind zwei Anschlagkörper 27 und zwei Anschlagkörper 28 angeordnet. Die Anschlagkörper 27 und 28 sind zylinderförmig ausgebildet. Sie weisen jeweils Anschlagflächen 29 und 30 auf. Die Anschlagkörper 27 wirken mit den Anschlagkörpern 16 und die Anschlagkörper 28 mit den Anschlagkörpern 15 zusammen. Diese Anschlagkörper 15, 16, 27 und 28 sind so ausgebildet, dass diese gegen Ende eine Abwinkelbewegung benachbarter Laschen dämpfend wirken. Hierbei bilden die Anschlagkörper 27, 28 und 15, 16 eine solche Konfiguration, dass diese als Dämpfungsmittel für die Krümmungsradiusdampfung und/oder Vorspannungsdämpfung dienen.

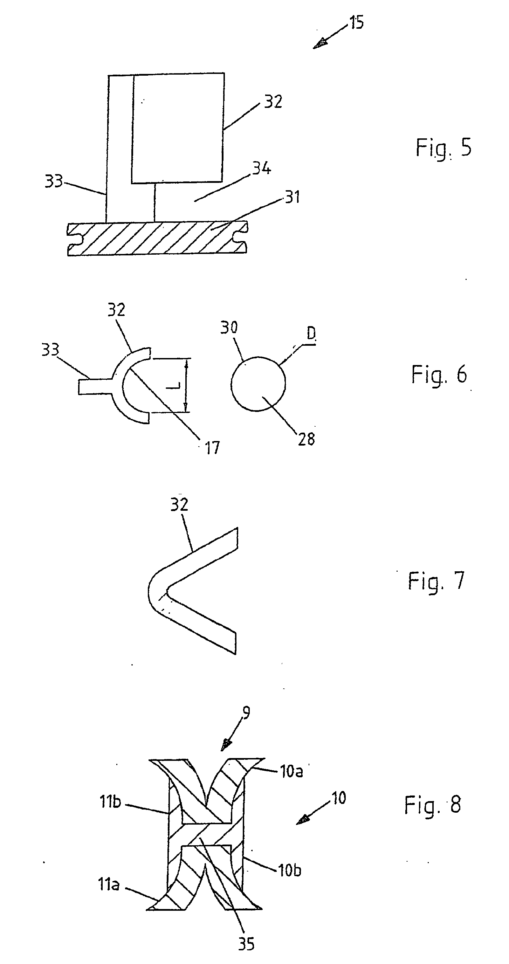

Figur 5 zeigt vergrößert einen Anschlagkörper 15 bzw. 16. Der Anschlagkörper 15 ist mit einer Bodenwand 31 des Überlappungsbereiches 3 verbunden. Zwischen einem Element 32 und der Bodenwand 31 ist ein Spalt 34 vorgesehen. Das Element 32 des Anschlagkörpers 15 ist über eine Rippe 33 versteift und mit der Bodenwand 31 verbunden.

In der Figur 6 ist der Anschlagkörper 15 sowie ein mit dem Anschlagkörper 15 zusammenwirkender Anschlagkörper 28 in einer Draufsicht dargestellt. Der Anschlagkörper 28 weist einen Durchmesser D auf. Das Element 32 ist im wesentlichen im Querschnitt schalenförmig gebildet, es weist eine Anschlagfläche 17 auf. Die lichte Breite L des schalenförmigen Elementes 32 ist dabei etwas kleiner als der Durchmesser D des Anschlagkörpers 20. Werden zwei benachbarte miteinander verbundene Kettenlaschen relativ zueinander verschwenkt, so gelangt der Anschlag 28 mit seiner Anschlagfläche 30 zur Anlage an die Anschlagfläche 17. Hierbei wird das Element aufgespreizt, dass mit einer Dämpfung der Bewegung einhergeht.

In einer entsprechenden Weise sind in dem dargestellten Ausführungsbeispiel die Anschlagkörper 16 und 27 ausgebildet.

In der Figur 7 ist ein weiteres Ausführungsbeispiel eines Anschlagkörpers 15 bzw. 16 dargestellt. Dieser unterscheidet sich darin, dass das Element 32 im Querschnitt im wesentlichen V-förmig ausgebildet ist. Die Funktionalität dieses Elementes 32 entspricht im wesentlichen der Funktionalität des Elementes 32, wie es in der Figur 6 dargestellt ist.

In den Figuren 1 und 2 ist eine Kettenlasche dargestellt, die drei funktionelle Bereiche aufweist. In einem ersten funktionellen Bereich sind Anschlagkörper mit Anschlagflächen angeordnet, die die Vorspannung einer Energieführungskette bestimmen. Im zweiten funktionellen Bereich sind Anschlagkörper angeordnet, die für die Abwinkelung im Krümmungsradius zuständig sind. Im dritten funktionellen Bereich sind Anschlagkörper vorgesehen, die für eine Dämpfung zuständig sind Es ist nicht zwingend, dass eine Kettenlasche drei funktionelle Bereiche aufweist. Soll keine Dämpfung vorgesehen sein, so kann auf den dritten funktionellen Bereich verzichtet werden. Es besteht jedoch auch die Möglichkeit, eine Dämpfung zu verwirklichen, so dass ein dritter funktioneller Bereich nicht zwingend notwendig ist. Eine solche Möglichkeit besteht darin, dass wenigstens eine Anschlagfläche aus einem ersten Material gebildet wird, wobei die Anschlagfläche wenigstens einen Bereich aufweist, der aus einem zweiten Material gebildet wird, der gegenüber dem ersten Material eine geringere Härte aufweist.

Die Figur 8 zeigt eine Modifikation des Anschlagkörpers 9. Die Modifikation besteht darin, dass die Anschlagflächen 10, 11 aus Materialien bestehen, die unterschiedliche Härte aufweisen. Die Anschlagfläche 10 weist einen Flächenbereich 10a und einen Flächenbereich 10b auf. Der Flächenbereich 10a besteht aus einem Material höherer Härte. Der Flächenbereich 10b besteht aus einem Material geringerer Härte. Bei diesem Material kann es sich beispielsweise um Gummi oder vergleichbare, Materialien handeln.

Auch die Fläche 11 umfasst eine Teilfläche 11a und eine Teilfläche 11b, wobei die Fläche 11 a aus dem gleichen Werkstoff gebildet ist, wie die Fläche 10a der Flächenbereich 11b aus dem gleichen Werkstoff besteht, wie die Teilfläche 10b. Das Dämpfungsmaterial kann beispielsweise im Wege des sogenannten Zwei-Komponenten-Spritzverfahrens an den Anschlagkörper 9 angebracht werden. Zur Erhöhung der Verbindungsfestigkeit weist der Anschlagkörper 9 eine Bohrung 35 auf. Statt einer Bohrung 35 kann auch ein Schlitz vorgesehen sein, der sich vom freien Ende des Anschlagkörpers 9 teilweise in Richtung der Bodenwand 31 erstreckt. Statt eines Zwei-Komponenten-Spritzverfahrens kann ein Anschlagkörper mit einem Dämpfungselement versehen werden, wobei das Dämpfungselement kraft- und/oder formschlüssig mit dem Anschlagkörper verbunden ist.

### Bezugszeichenliste

- 1: Kettenlasche
- 2: Überlappungsbereich
- 3: Überlappungsbereich
- 4: erster Gelenkkörper
- 5: zweiter Gelenkkörper
- 6: erster Bereich
- 7: zweiter Bereich
- 8: dritter Bereich
- 9: Anschlagkörper
- 10: Anschlagfläche
- 11: Anschlagfläche
- 12: Anschlagkörper
- 13: Anschlagfläche
- 14: Anschlagfläche
- 15: Anschlagkörper
- 16: Anschlagkörper
- 17: Anschlagflächen
- 18: Anschlagflächen
- 20: erster Bereich
- 21: zweiter Bereich
- 22: dritter Bereich
- 23: Anschlagkörper
- 24: Anschlagfläche
- 25: Anschlagkörper
- 26: Anschlagfläche
- 27: Anschlagkörper
- 28: Anschlagkörper
- 29: Anschlagflächen
- 30: Anschlagflächen
- 31: Bodenwand
- 32: Element
- 33: Rippe
- 34: Spalt
- 35: Bohrung

## Patentansprüche

1. Kettenlasche (1) für eine Energieführungskette, wobei die Kettenlasche (1) Überlappungsbereiche (2,3) mit eine Abwinkelung der Energieführungskette begrenzenden Anschlagflächen aufweist, **dadurch gekennzeichnet, dass** die Überlappungsbereiche (2,3) jeweils einen zentralen Bereich (8, 22) aufweisen, die jeweils von wenigstens zwei Bereichen umgeben sind, in denen jeweils einige Anschlagflächen (10,11, 13,14 ; 17,18, 24,26, 29) angeordnet sind, dass ein erster Bereich (6,20) der wenigstens zwei umgebenden Bereiche Anschlagkörper (9,23) mit Anschlagflächen (10,11, 24) aufweist, wobei diese bei einer aus den Kettenlaschen zusammengesetzten Energieführungskette eine Vorspannung der Energieführungskette bestimmen, und dass ein zweiter Bereich (7,21) der wenigstens zwei umgebenden Bereiche Anschlagkörper (12, 25) mit Anschlagflächen (13,14, 26) aufweist, wobei diese bei einer aus den Kettenlaschen zusammengesetzten Energieführungskette einen Krümmungsradius in einem Übergangsbereich zwischen einem Untertrum und einem Obertrum bestimmen, wobei die Bereiche im wesentlichen konzentrisch zueinander sind.

2. Kettenlasche (1) nach Anspruch 1, **gekennzeichnet durch** zwei Bereiche (6, 7, 20, 21), die so ausgebildet sind, dass bei einer aus den Kettenlaschen zusammengesetzten Energieführungskette die Abwinkelung der Energieführungskette in Abhängigkeit von Verschwenkrichtung unterschiedlich ist.

3. Kettenlasche (1) nach Anspruch 1 oder 2, **gekennzeichnet durch** einen dritten Bereiche (8, 22), der wenigstens einen Anschlagkörper (15, 16, 27, 28) mit wenigstens einer Anschlagfläche (17, 30) hat und der eine federelastische Charakteristik aufweist.

4. Kettenlasche (1) nach Anspruch 3, **dadurch gekennzeichnet, dass** der Anschlagkörper im Querschnitt im wesentlichen V-förmig ausgebildet ist.

5. Kettenlasche (1) nach Anspruch 3 oder 4, **dadurch gekennzeichnet, dass** die wenigstens eine Anschlagfläche aus einem ersten Material gebildet ist, wobei die Anschlagfläche wenigstens einen Bereich aufweist, der aus einem zweiten Material gebildet wird, der gegenüber dem ersten Material eine geringere Härte aufweist.

6. Kettenlasche (1) nach einem der Ansprüche 1 bis 5, **dadurch gekennzeichnet, dass** wenigstens einige Anschlagflächen im wesentlichen konvex ausgebildet sind.

7. Kettenlasche (1) nach einem der Ansprüche 1 bis 6, **dadurch gekennzeichnet, dass** wenigstens einige Anschlagflächen im wesentlichen konkav ausgebildet sind.

8. Energieführungskette mit gelenkig miteinander verbundenen Kettengliedern, die aus Kettenlaschen nach einem oder mehreren Ansprüchen 1 bis 7 und diese verbindenden Elementen gebildet sind.

## Claims

1. Link plate (1) for an energy transmission chain, wherein the link plate (1) has overlapping regions (2, 3) with stop surfaces limiting snaking of the energy transmission chain, **characterized in that** the overlapping regions (2, 3) each have a central region (8, 22), said regions each being surrounded by at least two regions in which a number of stop surfaces (10, 11, 13, 14; 17, 18, 24, 26, 29) is in each case arranged, **in that** a first region (6, 20) of the at least two surrounding regions has stop bodies (9, 23) with stop surfaces (10, 11, 24), wherein, when an energy transmission chain is assembled from the link plates, said stop surfaces determine a pretensioning of the energy transmission chain, and **in that** a second region (7, 21) of the at least two surrounding regions has stop bodies (12, 25) with stop surfaces (13, 14, 26), wherein, when an energy transmission chain is assembled from the link plates, said stop surfaces determine a radius of curvature in a transition region between a lower strand and an upper strand, wherein the regions are substantially concentric to one another.

2. Link plate (1) according to Claim 1, **characterized by** two regions (6, 7, 20, 21) which are designed in such a manner that, when an energy transmission chain is assembled from the link plates, the snaking of the energy transmission chain differs depending on the pivoting direction.

3. Link plate (1) according to Claim 1 or 2, **characterized by** a third region (8, 22) which has at least one stop body (15, 16, 27, 28) with at least one stop surface (17, 30) and which has a spring-elastic characteristic.

4. Link plate (1) according to Claim 3, **characterized in that** the stop body is of substantially V-shaped design in cross section.

5. Link plate (1) according to Claim 3 or 4, **characterized in that** the at least one stop surface is formed from a first material, wherein the stop surface has at least one region which is formed from a second material which is less hard than the first material.

6. Link plate (1) according to one of Claims 1 to 5, **characterized in that** at least some of the stop surfaces are of substantially convex design.

7. Link plate (1) according to one of Claims 1 to 6, **characterized in that** at least some of the stop surfaces are of substantially concave design.

8. Energy transmission chain with chain links which are connected to one another in an articulated manner and are formed from link plates according to one or more of Claims 1 to 7 and elements connecting said link plates.

## Revendications

1. Eclisse (1) pour une chaîne de transfert d'énergie, l'éclisse (1) présentant des régions de chevauchement (2, 3) avec des surfaces de butée limitant la courbure de la chaîne de transfert d'énergie, **caractérisée en ce que** les régions de chevauchement (2, 3) présentent à chaque fois une région centrale (8, 22), lesquelles régions centrales sont entourées à chaque fois par deux régions dans lesquelles sont disposées à chaque fois quelques surfaces de butée (10,11, 13,14 ; 17,18, 24, 26, 29), **en ce qu'**une première région (6, 20) des au moins deux régions périphériques présente des corps de butée (9, 23) avec des surfaces de butée (10, 11, 24), celles-ci déterminant une précontrainte de la chaîne de transfert d'énergie dans le cas d'une chaîne de transfert d'énergie constituée des éclisses, et **en ce qu'**une deuxième région (7, 21) des au moins deux régions périphériques présente des corps de butée (12, 25) avec des faces de butée (13, 14, 26), celles-ci déterminant un rayon de courbure dans une région de transition entre un tronçon inférieur et un tronçon supérieur dans le cas d'une chaîne de transfert d'énergie constituée des éclisses, les régions étant sensiblement concentriques les unes aux autres.

2. Eclisse (1) selon la revendication 1, **caractérisée par** deux régions (6, 7, 20, 21) qui sont réalisées de telle sorte que dans le cas d'une chaîne de transfert d'énergie constituée des éclisses, la courbure de la chaîne de transfert d'énergie diffère en fonction du sens de pivotement.

3. Eclisse (1) selon la revendication 1 ou 2, **caractérisée par** une troisième région (8, 22) qui a au moins un corps de butée (15, 16, 27, 28) avec au moins une surface de butée (17, 30) et qui présente une caractéristique élastique à ressort.

4. Eclisse (1) selon la revendication 3, **caractérisée en ce que** le corps de butée est réalisé sensiblement en forme de V en section transversale.

5. Eclisse (1) selon la revendication 3 ou 4, **caractérisée en ce que** l'au moins une surface de butée est formée d'un premier matériau, la surface de butée présentant au moins une région qui est formée d'un deuxième matériau, qui présente une moindre dureté par rapport au premier matériau.

6. Eclisse (1) selon l'une quelconque des revendications 1 à 5, **caractérisée en ce qu'**au moins quelques surfaces de butée sont réalisées sensiblement sous forme convexe.

7. Eclisse (1) selon l'une quelconque des revendications 1 à 6, **caractérisée en ce qu'**au moins quelques surfaces de butée sont réalisées sensiblement sous forme concave.

8. Chaîne de transfert d'énergie comprenant des maillons de chaîne connectés de manière articulée les uns aux autres, qui sont formés par des éclisses selon l'une quelconque ou plusieurs des revendications 1 à 7 et par des éléments reliant celles-ci.
